(19)

Europäisches
Patentamt
European
Patent Office
Office européen
des brevets

(11) **EP 1 758 273 A1**

(12) **EUROPEAN PATENT APPLICATION**

(43) Date of publication:
**28.02.2007 Bulletin 2007/09**

(51) Int Cl.:
*H04B 7/26* (2006.01)

(21) Application number: **05018185.8**

(22) Date of filing: **22.08.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **MATSUSHITA ELECTRIC INDUSTRIAL
CO., LTD.
Kadoma-shi, Osaka 571-8501 (JP)**

(72) Inventors:
• **Cooper, David
Newbury (GB)**
• **Dhanda, Mungal
Slough (GB)**

(74) Representative: **Grünecker, Kinkeldey,
Stockmair & Schwanhäusser
Anwaltssozietät
Maximilianstrasse 58
80538 München (DE)**

(54) **Method and apparatus for reducing a transmission time interval**

(57)    The invention relates to a method for transmitting at least two normal bursts from a radio block untilising a TDMA frame comprising a plurality of timeslots. The method comprises the following steps performed by a transmitting apparatus: allocating the at least two normal bursts of the radio block to be transmitted to timeslots of the TDMA frame, wherein the allocation considers the number of receivers available at a receiving apparatus for receiving the timeslots of the TDMA frame and considers the time required by the receiving apparatus to switch a receiver of said number of receivers between distinct frequencies; and transmitting the at least two normal bursts within timeslots of the TDMA frame utilizing at least two distinct frequencies.

**Figure 7**

EP 1 758 273 A1

**Description**

Field Of The Invention

The invention generally relates to mobile communications and in particular to increasing a peak data rate at the air interface of GPRS.

The invention concerns a method for transmitting at least two normal bursts from a radio block utilizing a TDMA frame comprising a plurality of timeslots; a method for receiving at least two normal bursts from a radio block within a TDMA frame comprising a plurality of time slots; an apparatus for transmitting at least two normal bursts from a radio block utilizing a TDMA frame comprising a plurality of timeslots; an apparatus for receiving at least two normal bursts from a radio block within a TDMA frame comprising a plurality of time slots; and a communication system comprising the transmission apparatus and the receiving apparatus.

Technical Background

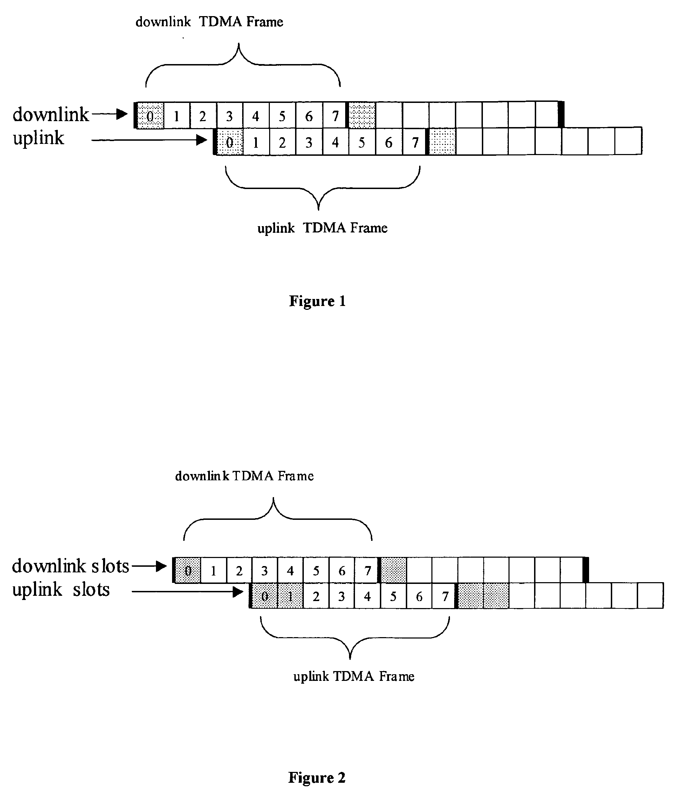

The GSM (Global System for Mobile communication) radio system (and its extension to GPRS) employs frequency division duplexing, in which different radio frequencies are used for transmission from base station to mobile station (downlink transmission) and transmission from mobile station to base station (uplink transmission). A Time Division Multiple Access (TDMA) scheme is used to share uplink and downlink radio channels between different mobiles. To do this a time structure is imposed on each radio channel, consisting of a repeated grouping of eight timeslots, where each group is called a TDMA frame. When making a speech call, a mobile terminal will have ownership of one particular timeslot within each TDMA frame, and the other timeslots can be used by other mobile terminals. For example a particular mobile terminal might own slot 0, while other mobiles own slots 1 to 7. Figure 1 illustrates this in the case of GSM circuit switched operation, the type of operation that is used for a speech call.

To further simplify, Time Division Duplexing (TDD) is used to ensure that the radio transceiver in the mobile station is not required to transmit and receive simultaneously. This simplifies the design of the radio. This TDD is achieved by adhering to the convention that the mobile station owns the same slot number in the uplink as in the downlink, but placing a three slot delay between the downlink slot structure and the corresponding uplink structure. This gives the mobile station time to re-tune, turn around and perform neighbour cell measurements between the uplink and downlink slots. Figure 1 shows there are two free TDMA slots between performing a receive operation and performing the next transmit operation, which allows ample time for the mobile to re-tune the local oscillator for transmission and perform any other necessary preparation. There is even more time, four free TDMA slots, between performing a transmit operation and the next receive operation. This additional time is used to perform neighbour cell measurements.

The GPRS system is an extension of the basic GSM system and is used for packet switched communications. It allows an increased data rate during packet data transfer by using more than one timeslot either for transmission or reception. For example, Figure 2 illustrates a GPRS system where, in this particular example, two slots are used for transmission and one for reception. GPRS allows the number of uplink slots and downlink timeslots to vary according to constraints determined by the mobile station and the availability of timeslots. Note that as more slots are used for transmission and reception, the constraints on the radio become more stringent; for example in this example there are only three free slots between a transmit operation and the next receive operation, rather than the four shown in Figure 1.

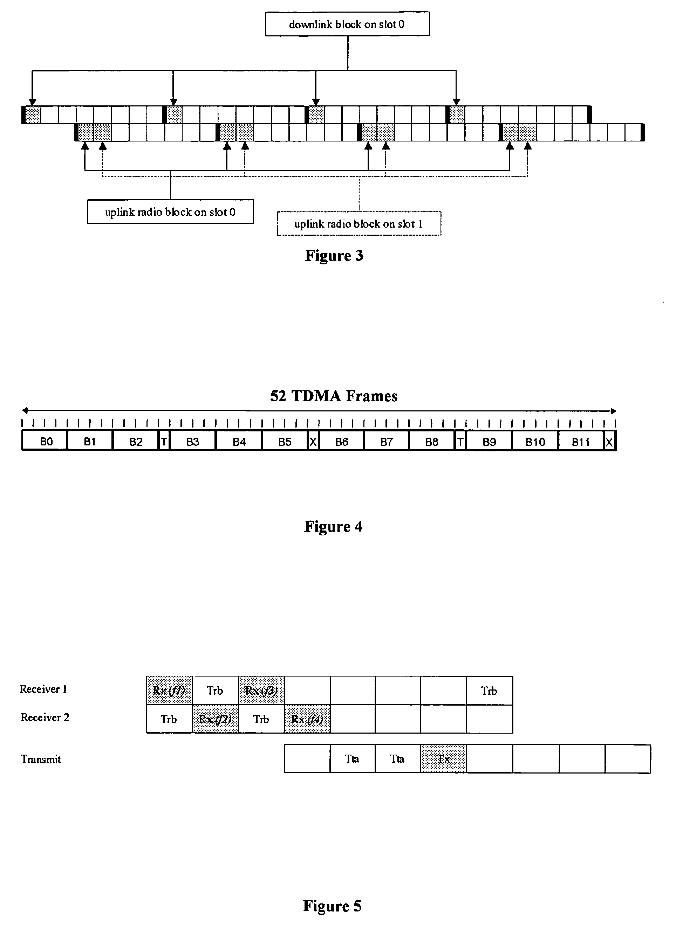

In both circuit switched operation and packet switched operation information is transmitted in the form of radio blocks (a radio block is the sequence of four normal bursts carrying one RLC/MAC protocol data units), where each radio block consists of four normal bursts (NB), this burst is used to carry information on traffic and control channels, except for RACH, PRACH and CPRACH; it contains 116 encrypted symbols and includes a guard time of 8.25 symbol duration which is equivalent to 30.46μs), which are transmitted on the same timeslot in a number of successive TDMA frames. This is illustrated in Figure 3, which shows that method used for GPRS: radio blocks are always transmitted over four consecutive TDMA frames. If more than one timeslot is used for uplink or downlink in each frame, then separate and independent radio blocks are sent on each timeslot.

Lastly, a repeating multiframe structure is imposed on TDMA frames, with a repetition period of 52 TDMA frames, as shown in Figure 4. Groups of four consecutive TDMA frames within the multiframe structure are used to contain the logical channel containing the GPRS radio blocks; these are labelled B0, B1... B11. The other TDMA frames labelled T and X are reserved for signalling and neighbour cell monitoring purposes. The repeat rate of the multiframe structure is 240ms, and each multiframe structure contains 12 radio block periods, so the average radio block TTI (Transmission Time Interval) is 20ms. This clearly introduces a transmission delay for each radio block - the time interval from the time the data must be ready for transmission to the time that transmission is completed is 20ms.

The transmission delay could in principle be reduced by using multiple timeslots in a single TDMA frame assuming the mobile station is capable. The block could be transmitted on timeslots 0 and 1 in two consecutive frames, or 0, 1, 2 and 3 in one frame for example.

The reason this is not done is that the GSM systems rely on frequency diversity to aid forward error correction. To achieve frequency diversity, GSM uses frequency hopping at the TDMA frame rate together with time interleaving and error correction coding. The uplink/downlink frequency pairings used in successive TDMA frames are independent, but within a TDMA frame they do not change. The data comprising a single radio block is coded using code with considerable redundancy, and the output of the coding operation is interleaved over the four timeslots containing the transmission. If one timeslot is lost, for example due to interference at a specific frequency, there is enough redundant information in the remaining three timeslots to recover the information.

For this reason, the transmissions on different timeslots in a single TDMA frame always belong to separate, independent, radio blocks. To attempt to transmit the radio block using more than on slot in a TDMA frame would lead to performance degradation, since the frequency diversity gain would be lost.

Recently there has been considerable activity within the 3GPP to find methods of reducing the transmission time interval (TTI) of a GPRS (General Packet Radio System) radio link. For example, Ericsson has shown how to reduce the TTI to 5ms, its minimum theoretical value, using a four receiver architecture (see "GERAN evolution - Proposed text on dual-carrier and multi-carrier for technical report", Document GP-051510, 20 June 2005, Ericsson, published on 3GPP website www.3gpp.org).

The method proposed by Ericsson relies heavily on an increased number of receivers in the mobile station. This has the drawback of making the hardware of the mobile station more complex, more expensive and harder to integrate into a small space.

Summary Of The Invention

The present invention has been made in consideration of the above situation and has as its object to reduce the transmission time interval (TTI) while minimizing the number of receivers needed for this and maintaining frequency diversity gain.

The object is solved by the subject matter of the independent claims. Advantageous embodiments of the invention are subject matters to the dependent claims.

To achieve this object, the present invention provides a method, apparatus, system and computer-readable medium for transmitting at least two normal bursts from a radio block in a TDMA system. The normal bursts of the radio block to be transmitted are allocated to timeslots of a single TDMA frame. During the allocation the number of receivers available at a receiving apparatus is taken into consideration, as is the time for a receiver to switch between the frequencies. The normal bursts are transmitted within the timeslots of TDMA frame using at least two different frequencies.

According to an advantageous embodiment, the method for transmitting at least two normal bursts from a radio block utilizing a TDMA frame comprising a plurality of timeslots is provided. A transmitting apparatus performs the following steps of the method. At least two normal burst of the radio block to be transmitted to timeslots of the TDMA frame are allocated, wherein the allocation considers the number of receivers available at a receiving apparatus for receiving the timeslots of the TDMA frame, and considers the time required by the receiving apparatus to switch a receiver of said number of receivers between distinct frequencies. Then the at least two normal bursts within timeslots of the TDMA frame utilising at least two distinct frequencies are transmitted.

The advantage of this embodiment is that the transmission of the normal bursts at different frequencies means that frequency diversity gain can be employed.

In a further embodiment of the invention, the transmitting apparatus may further transmit timeslots comprising normal bursts of the radio block to one receiver of said number of receivers at at least two distinct frequencies, the timeslots being spaced by at least a time interval (Trb) needed by the one receiver of the receiving apparatus for switching between the at least two distinct frequencies.

According to another embodiment of the invention, the method for transmitting can be used in a downlink or an uplink transmission.

Another advantageous embodiment allows for exploiting frequency diversity gain due to transmission of normal bursts at distinct frequencies.

Another embodiment of the invention relates to a method for receiving at least two normal bursts from a radio block within a TDMA frame comprising a plurality of timeslots. A receiving apparatus comprising a receiver performs the following method steps. A timeslot comprising a first of at least two normal bursts of the radio block at a first frequency is received by the receiver of the receiving apparatus. The receiver is switched to a distinct second frequency upon having received the first of the at least two normal bursts of the radio block. Then the receiver receives another timeslot of the TDMA frame comprising the second of the at least two normal bursts at the second frequency of the receiving apparatus.

In another embodiment of the invention, the timeslots received by the receiver are spaced by at least a time interval (Trb) needed to switch the receiver between the first and second frequencies.

In a further embodiment of the invention the receiving apparatus comprises at least two receivers, and the method comprises the step of switching each of the at least two receivers to another distinct frequency between each reception of a timeslots of the TDMA frame comprising a normal burst of the radio block.

An advantageous aspect of the invention is that it can be used with one receiver in the receiving apparatus or with two or more receivers in the receiving apparatus, increasing the improvement of TTI as more receivers are used.

According to another advantageous embodiment, the method further comprises the step of performing neighbour cell measurement and preparation for transmission in the time interval (Tta) between reception of a timeslot comprising one of at least two bursts and subsequent transmission of data in a timeslot.

A further embodiment of the invention relates to the receiver of the reception apparatus receiving a timeslot comprising one of the at least two normal bursts, while a second receiver prepares for receiving another normal burst of the radio block by switching between two distinct frequencies.

An advantageous effect is that different receiver configurations are possible, including one receiver receiving a timeslot comprising one normal burst while a second receiver prepares for receiving another normal burst of the radio block.

According to a further advantageous embodiment of the invention, the receiver receives a timeslot comprising the first of the at least two normal bursts at one frequency, while a second receiver receives a timeslot comprising the second normal burst of the at least two normal bursts at another distinct frequency.

Another advantageous embodiment has the two receivers simultaneously receiving a normal burst each at different frequencies.

Another advantageous embodiment of the present invention relates to an apparatus for transmitting at least two normal bursts from a radio block, utilising a TDMA frame comprising a plurality of timeslots. The apparatus comprises allocation means for allocating the at least two normal bursts of the radio block to be transmitted to timeslots of the TDMA frame, wherein the allocation means is adapted to consider the number of receivers available at a receiving apparatus, for receiving the timeslots of the TDMA frame, and to consider the time required by the receiving apparatus to switch a receiver of said number of receivers between distinct frequencies. The apparatus further comprises transmission means for transmitting the at least two normal bursts within timeslots of the TDMA frame utilising at least two distinct frequencies.

The transmitting apparatus may further comprise at least two transmission means for transmitting at at least two distinct frequencies.

In a further advantageous embodiment, the transmitting apparatus is a mobile station or a base station.

A further advantageous embodiment of the present invention relates to an apparatus for receiving at least two normal bursts from a radio block within a TDMA frame comprising a plurality of timeslots. The apparatus comprises at least one receiver for receiving a timeslot comprising the first of the at least two normal bursts at a first frequencies, wherein the receiver is adapted to switch to a distinct second frequency. The receiver is further adapted to receive another timeslots of the TDMA frame, comprising the second of the at least two normal bursts at the second frequency.

In a variation of this embodiment of the invention, the apparatus comprises two receivers for receiving at at least four distinct frequencies within the TDMA frame.

A further advantageous embodiment relates to a communication system comprising the transmission apparatus as described above and the receiving apparatus as described above.

In a further embodiment, the communication system further comprises a duplexer for switching between the transmitting apparatus and the receiving apparatus.

Another embodiment of this invention relates to a computer-readable medium storing instructions that, when executed by a processor of a transmitting apparatus, cause the transmitting apparatus to transmit at least two bursts from a radio block utilising a TDMA frame comprising a plurality of timeslots, by performing the steps of the method according to one of the various embodiments and variations thereof described herein.

A further embodiment of the invention relates to a computer-readable medium storing instructions that, when executed by a processor of a receiving apparatus, cause the receiving apparatus to receive at least two bursts from a radio block utilizing a TDMA frame comprising a plurality of timeslots, by performing the steps of the method according to one of the various embodiments and variations thereof described herein.

Brief Description Of The Figures

Further features and advantages will become apparent from the following, and more particular description of the various embodiments of the invention as illustrated in the accompanying drawings, wherein:

Figure 1 shows TDMA frames in GSM circuit switched operation;

Figure 2 shows TDMA frames in GPRS packet switched operation;

Figure 3 shows TDMA frames in GPRS packet switched operation with the downlink block on slot 0 and uplink radio blocks on slot 0 and slot 1;

Figure 4 shows a multi frame structure with 52 TDMA frames;

Figure 5 shows a sequential dual carrier configuration of TDMA frames with a TTI of 5 ms;

Figure 6 shows a parallel dual carrier configuration of TDMA frames with a TTI of 5 ms;

Figure 7 shows a sequential single carrier configuration of TDMA frames with a TTI of 10 ms;

Figure 8 is a block diagram of a mobile station; and

Figure 9 is a block diagram of a base station.

Detailed Description Of The Invention

The following paragraphs will describe various embodiments of the invention including the general characteristics of a single, dual or multiple receiver configurations, and illustrates further, alternative, configurations.

For exemplary purposes only, most of the embodiments are outlined in relation to a GPRS communication system, and the terminology used in the subsequent sections mainly relates to the GSM and GPRS terminology. However, the used terminology and the description of the embodiments with respect to a GSM/GPRS architecture is not intended to limit the principles and ideas of the inventions to such systems.

Also, the detailed explanations given in the technical background section above are merely intended to better understand the mostly GSM/GPRS specific exemplary embodiments described in the following, and should not be understood as limiting the invention to the described specific implementations of processors and functions in the mobile communication network.

As set out in the technical background section above, TDMA frames comprising a plurality of timeslots are used in GPRS communications. More than one timeslot is used either for transmission or reception as shown in Figure 2. Normal bursts which are used to carry information on traffic and control channels (except for RACH, PRACH and CPRACH) are transmitted in the timeslots of a TDMA frame, where four normal bursts make up a radio block.

Figures 5, 6 and 7 show timeslot configurations in TDMA frames that reduce the transmission time interval by minimising the number of receivers needed for this, and maintaining frequency diversity gain. To enable this, the receiver has to be able to prepare to receive on a given receive frequency channel, within time Trb (time to get ready to receive at a new frequency, assuming no neighbour cell measurement, in this case one slot). Also the receiver can prepare to receive on a given receive frequency channel, and performing neighbour cell monitoring, within time Tra (time to get ready to receive at a new frequency and performing neighbour cell monitoring). After preparing to receive one or more slots on a given receive frequency channel, the receiver receives from 1 up to Rx slots during a TDMA frame on that channel is also necessary, where Rx is a parameter determined by the multislot class of the transceiver.

The transmitter has to be able to prepare to transmit on a given transmit frequency channel, within time Ttb (time to get ready to transmit at a new frequency assuming no neighbour cell measurement). Also the transmitter prepares to transmit on a given transmit frequency channel, and performing neighbour cell monitoring, within time Tta (time to perform neighbour cell measurement and get ready to transmit frequency, in this case 2 slots).

After preparing to transmit one or more slots on a given receive frequency channel, the transmitter receives from 1 to Tx slots during a TDMA frame on that channel is also necessary, where Tx is a parameter determined by the multislot class of the transceiver.

Therefore, the transceiver, which can comprise one or more receivers and one or more transmitters, has to comply to the equation:

$$Tx + Rx \leq Sum,$$

where Sum is a parameter determined by the multislot class of the transceiver. To enable the operation of the receiver and transmitter as detailed above, the transceiver can perform transmit operations and receive operations in sequence but not simultaneously. A defined number Nrx of receiver means, where this number is a property of the transceiver at the mobile, may simultaneously and independently be operated (in the case of two, this is called dual-receiver capability).

Then the TTI of the downlink radio block can be reduced, while frequency diversity is maintained, by transmitting more than one normal burst from that radio block in a TDMA frame. The following characteristics are applied to each downlink radio block to ensure that a mobile containing a transceiver with the characteristics as detailed above can receive the radio block.

More than one normal burst from a downlink radio block is transmitted in a single TDMA frame. Each timeslot in a given TDMA frame containing normal bursts from a downlink radio block is transmitted using a different frequency. For each downlink radio block, each timeslot in a TDMA frame containing normal bursts comprising that radio block can be separated into at most a number Nrx of sequences consisting of timeslots and time intervals. Each sequence has the property that the timeslots in the sequence are separated by a time interval from each other and from any preceding or succeeding transmission or reception activity. This time interval has to be at least long enough to allow the receiver to switch to a different frequency, therefore at least Trb.

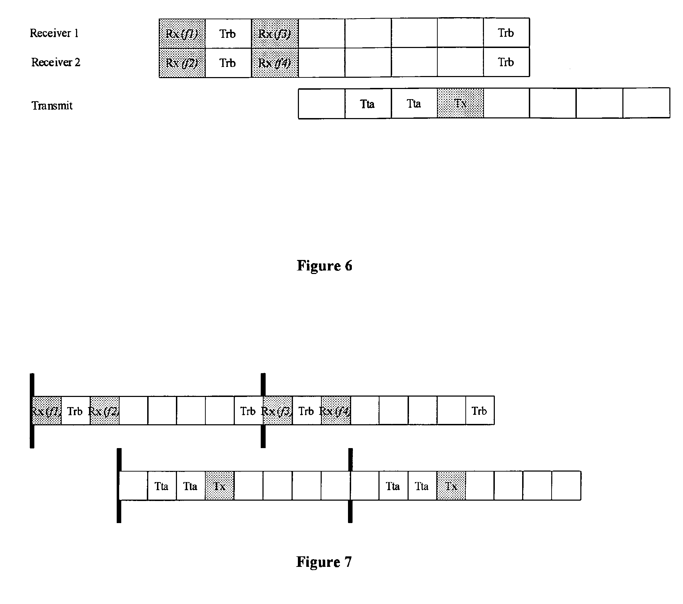

According to an embodiment of the invention one receiver can be used to achieve a TTI of 10 ms. Using this conventional single receiver architecture and allowing gaps between received timeslots in which the receiver can prepare for reception of the next timeslot makes this possible. A possible configuration is shown in Figure 7, which shows two consecutive TDMA frames.

Note that this is not the only possible configuration. Also the extension to any number of multicarriers is possible (in this case any number of carriers is permitted, there is no need to it to be a multiple of two).

In another embodiment the TTI of the GPRS radio block can be reduced from 20ms to 5ms, with no loss of frequency diversity gain, on the assumption that the mobile terminal has two receivers, each capable of switching frequencies within one timeslot, and that the mobile terminal is capable of receiving four downlink TDMA slots.

The following method steps are employed to achieve this. The radio block is transmitted during four timeslots in one TDMA frame, while frequency hopping may still be applied so that each timeslot comprising the radio block is transmitted on a different frequency. Each of the separate receivers in the mobile terminal is required to receive at most one timeslot consecutively in a given TDMA frame, and after receiving a timeslot, a time interval Trb is available for each receiver to prepare to receive any subsequent timeslot in the same TDMA frame

In this manner the four timeslots comprising the radio block are received on four independent frequencies within one TDMA frame, using only a two-carrier receiver. This maintains the same frequency diversity gain as the conventional approach, but improves TTI to 5ms.

Figure 5 shows how, for example, four slots would be received on the downlink at independent frequencies f1...f4, and one transmitted on the uplink according to an embodiment of the invention.

The invention can be extended to multi-carrier receivers (provided the number of carriers is a multiple of two) where each set of two carriers is capable of transmitting one radio block per 5ms.

There exist several alternative configurations using the dual receiver capability that have this property.

Another embodiment (Figure 6) shows how two slots can be transmitted in parallel and received in parallel assuming a dual receiver configuration.

When using the configuration according to the embodiment described above for the one receiver configuration, no changes in the hardware configuration of the mobile station are necessary, as the receiver switches between the two frequencies $f_1$ and $f_2$ by allowing time intervals between received timeslots in which the receiver can prepare for reception of the next timeslot at a different frequency. The base station however will have to transmit at the two frequencies $f_1$ and $f_2$ to transmit at least two normal bursts of a radio block in a TDMA frame. As long as time Ttb is given this can be done with one transmitter.

As soon as a dual receiver configuration is required to receive four or more timeslots at distinct frequencies in a TDMA frame, a dual transmitter architecture is also necessary.

The distinct frequencies in the downlink are in the GSM downlink band (for example 935-960 MHz or 1805 to 1880 MHz) at the carrier frequencies. The central frequencies of the carrier frequency slots are spread evenly every 200 kHz within these bands.

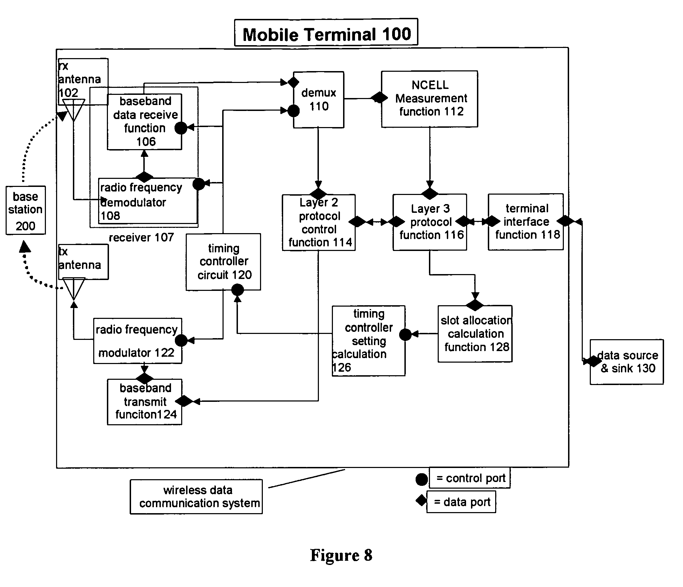

Figure 8 shows a block diagram of the mobile terminal according to an embodiment of the invention.

First downlink transmissions of a mobile station are discussed in more detail. The base station 200 transmits GPRS signals to the data communication terminal 100 which are received on the receive antenna 102, and are demodulated to baseband by radio frequency demodulator 108 which deliver baseband signal to baseband data receiver 106. If multiple receivers are used, there is one set of radio frequency demodulators 108 and baseband data receivers 106 per receiver 107. The receiver 107 delivers the received baseband data to a demultiplexer (demux) 110, which selects either the neighbour cell measurement unit 112 or the layer 2 protocol unit 114 to process the data, depending on its control input from the timing controller 120.

If the downlink baseband data is destined for the NCELL measurement unit 112, this unit performs neighbour cell measurement for use in the decision on a possible handover, and transmits the resulting information regarding the quality of the signal to the layer 3 protocol unit 116, which in turn transmits the data to the base station 200 via the uplink.

The layer 3 protocol unit 116 separates out user plane and control plane data. User data is sent to the terminal interface unit 118, which sends it to the external data source and sink 130.

Control plane data is used to perform an internal control function; in particular any GPRS slot allocation frames sent from the base station 200 are used to send parameter data to the slot allocation calculator 128, which calculates which TDMA slots will be used for data receive, data transmit and neighbour cell measurement purposes. As an improvement compared to prior art, the slot allocation calculator function considers the number of receivers 107 present and provides a capability to receive at least two normal bursts of a radio block in the timeslots of a single TDMA frame by a single receiver 107 subject to the time slots being spaced by at least the time interval Trb needed by one receiver 107 for switching between the two frequencies.

This information is sent to the timing controller setting calculator 126, which in turn reconfigures the timing controller 120 to perform receive, transmit and NCELL measurement actions at the correct time.

The timing controller 120 is responsible for timing and controlling the reception and transmission of signals to the base station 200, and is responsible for the reception of measurement data. It controls the precise timing and behaviour of the radio frequency modulator 122, radio frequency demodulator 108, baseband data receiver 106, baseband transmitter 124, and demultiplexer 110.

Next, uplink transmissions of a mobile station are discussed in more detail. User data emanating from the external data source and sink 130 is accepted by the terminal interface unit 118 and given to the layer 3 protocol unit 116. This multiplexes it with any protocol control data, and transmits it via the layer 2 protocol control unit 114 which in turn sends it to the baseband transmitter 124 after which it is modulated by the radio frequency modulator 122 before being transmitted over the transmit antenna 104.

The extension to the case of a mobile station containing multiple transmitter means, allowing reduced TTI on uplink radio blocks, is also possible.

Having discussed aspects of the structure and operation of the mobile station, the following sections describe a base station according to an embodiment of the invention.

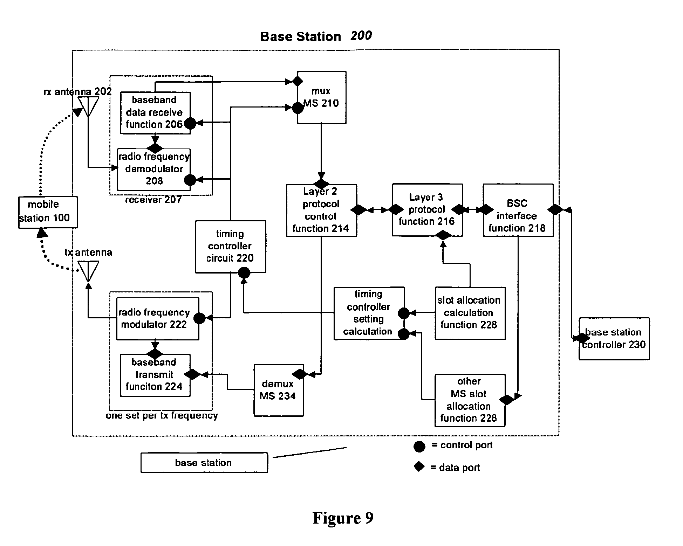

Figure 9 shows a block diagram of a base station, which is described in the following.

In the uplink, each mobile station 100 transmits precisely timed GPRS signals to the base station 200, which are received on the receive antenna 202, and are demodulated to baseband by a radio frequency demodulator 208, which delivers a baseband signal to the baseband data receiver 206. If multiple receive frequencies are used, each receiver 207 is one set of radio frequency demodulators 208 and baseband data receivers 206 per frequency. This delivers the received baseband data to a multiplexer MS 210 which marks which MS the data has arrived from depending on its control input from the timing controller 220, and forwards all data to the layer 2 protocol control unit 214, which maintains a separate context for each mobile station 100.

Downlink baseband data used for NCELL measurement is routed to the Layer 3 protocol unit 216, which maintains a separate context for each mobile station 100. This separates out user plane and radio resource control plane data. User data and radio resource control data is sent to the BSC interface unit 218, which sends it to the external Base Station Controller 230.

Radio resource control plane data is used to perform internal control functions; in particular the slot allocation calculator 228 calculates, typically according to the data rate required, which GPRS slots are allocated for each mobile station 100. This information is sent to the layer 3 protocol unit 216, which sends allocation information to the mobile station 100. This information is also sent to the timing controller setting calculator 226, which in turn reconfigures the timing controller 220 to perform receive and transmit actions towards each mobile 100 at the correct time. As a novel improvement compared to prior art, the slot allocation calculator function considers the number of receivers 107 present in the mobile 100 and uses the capability for the mobile 100 to receive at least two normal bursts of a radio block in the timeslots of a single TDMA frame by a single receiver 107 subject to the time slots being spaced by at least the time interval Trb needed by one receiver 107 for switching between the two frequencies.

The timing controller 220 is responsible for timing and controlling the reception and transmission of signals towards the mobile station 100. It controls the precise timing and behaviour of the radio frequency modulator 222, radio frequency demodulator 208, baseband data receiver 206, baseband transmitter 224, and multiplexer MS 210 and demultiplexer MS 234. and behaviour of the radio frequency modulator 222, radio frequency demodulator 208, baseband data receiver 206, baseband transmitter 224, and multiplexer MS 210 and demultiplexer MS 234.

In the downlink, user data and control data emanating from the external base station controller 230 is accepted by the BSC interface unit 218 and given to the layer 3 protocol unit 216. This multiplexes it with any radio resource control data, and transmits it via the layer 2 protocol control unit 214 which in turn sends it to the demultiplexer MS 234. This is responsible for providing the data for each mobile station 100 on the correct TDMA slot to the correct baseband transmitter 224 after which it is modulated by the radio frequency modulator 222 before being transmitted over the transmit antenna 204. If multiple transmit frequencies are used, there is one set of radio frequency modulators 222 and baseband data transmitters 224 per frequency.

Another embodiment of the invention relates to the implementation of the above described various embodiments using hardware and software. It is recognised that the various above-mentioned methods, as well as the various logical blocks, modules, circuits described above, may be implemented where performed using computing devices (processors), as for example general purpose processors, Digital Signal Processors (DSP), Applications Specific Integrated Circuits (ASIC), Field Programmable Gate Arrays (FPGA) or other programmable logic devices etc. The various embodiments of the invention may also be performed or embodied by a combination of these devices.

Further, the various embodiments of the invention may also be implemented by means of software modules which are executed by a processor or directly in hardware. Also, a combination of software modules and a hardware implementation may be possible. The software modules may be stored in any kind of computer-readable storage medium for example RAM, EPROM, EEPROM, flash memory, registers, hard disks, CD-ROM, DVD, etc.

**Claims**

1. A method for transmitting at least two normal bursts from a radio block utilising a TDMA frame comprising a plurality of timeslots, the method comprising the following steps performed by a transmitting apparatus:

   allocating the at least two normal bursts of the radio block to be transmitted to timeslots of the TDMA frame;
   wherein the allocation considers the number of receivers available at a receiving apparatus for receiving the timeslots of the TDMA frame and considers the time required by the receiving apparatus to switch a receiver of said number of receivers between distinct frequencies; and
   transmitting the at least two normal bursts within timeslots of the TDMA frame utilising at least two distinct frequencies.

**2.** The method according to claim 1, further comprising the step of transmitting timeslots comprising normal bursts of the radio block to one receiver of said number of receivers at at least two distinct frequencies, the time slots being spaced by at least a time interval (Trb) needed by the one receiver of the receiving apparatus for switching between the at least two distinct frequencies.

**3.** The method according to any of claims 1 or 2, wherein the method for transmitting is utilised in a downlink or uplink transmission.

**4.** The method according to any of claims 1 to 3, wherein transmission of normal bursts at distinct frequencies allows for exploiting frequency diversity gain.

**5.** A method for receiving at least two normal bursts from a radio block within a TDMA frame comprising a plurality of timeslots, the method comprising the following steps performed by a receiving apparatus comprising a receiver:

receiving by the receiver of the receiving apparatus a timeslot comprising a first of the at least two normal bursts of the radio block at a first frequency;
upon having received the first of the at least two normal bursts of the radio block, switching the receiver to a distinct second frequency; and
receiving by said receiver another timeslot of the TDMA frame comprising the second of the at least two normal bursts at the second frequency of the receiving apparatus.

**6.** The method according to claim 5, wherein the timeslots received by the receiver are spaced by at least a time interval (Trb) needed to switch the receiver between the first and second frequencies.

**7.** The method according to claim 5 or 6, wherein the receiving apparatus comprises at least two receivers, and the method comprises the step of switching each of the at least two receivers to another distinct frequency between each reception of a timeslot of the TDMA frame comprising a normal burst of the radio block.

**8.** The method according to any of claims 5 to 7, wherein the method for receiving is utilised in a downlink or uplink reception.

**9.** The method according to any of claims 5 to 8, further comprising the step of performing neighbour cell measurement and preparation for transmission in the time interval (Tta) between reception of a timeslot comprising one of at least two bursts and subsequent transmission of data in a timeslot.

**10.** The method according to any of claims 7 to 9, wherein the receiver of the reception apparatus receives a timeslot comprising one of the at least two normal bursts while a second receiver prepares for receiving another normal burst of the radio block by switching between two distinct frequencies.

**11.** The method according to any of claims 8 to 10, wherein the receiver receives a timeslot comprising the first of the at least two normal bursts at one frequency while a second receiver receives a timeslot comprising the second normal burst of the at least two normal bursts at another distinct frequency.

**12.** The method according to any of claims 5 to 11, wherein reception of normal bursts at distinct frequencies allows for exploiting frequency diversity gain.

**13.** An apparatus for transmitting at least two normal bursts from a radio block utilising a TDMA frame comprising a plurality of timeslots, the apparatus comprising:

allocation means for allocating the at least two normal bursts of the radio block to be transmitted to timeslots of the TDMA frame, wherein the allocation means is adapted to consider the number of receivers available at a receiving apparatus for receiving the timeslots of the TDMA frame and to consider the time required by the receiving apparatus to switch a receiver of said number of receivers between distinct frequencies; and
transmission means for transmitting the at least two normal bursts within timeslots of the TDMA frame utilising at least two distinct frequencies.

**14.** The apparatus according to claim 13, the transmission means further being adapted to transmit timeslots comprising normal bursts of the radio block to one receiver of said number of receivers at at least two distinct frequencies, the time slots being spaced by at least a time interval (Trb) needed by the one receiver of the receiving apparatus for switching between the at least two distinct frequencies.

**15.** The apparatus according to any of claims 13 or 14, wherein the transmission apparatus is utilised for a downlink or uplink transmission.

**16.** The apparatus according to any of claims 13 to 15, comprising at least two transmission means for transmitting at at least two distinct frequencies.

**17.** The apparatus according to any of claims 13 to 16, where the apparatus is a mobile station or a base station.

18. An apparatus for receiving at least two normal bursts from a radio block within a TDMA frame comprising a plurality of timeslots, the apparatus comprising:

at least one receiver for receiving a timeslot comprising the first of the at least two normal bursts at a first frequency;
wherein the receiver is adapted to switch to a distinct second frequency; and
the receiver is further adapted to receive another timeslot of the TDMA frame comprising the second of the at least two normal bursts at the second frequency.

19. The apparatus according to claim 18, wherein the timeslots received by one receiver are spaced by at least a time interval (Trb) needed to switch the receiver between the first and second frequencies.

20. The apparatus according to any of claims 18 or 19, wherein the apparatus is adapted to be used for a downlink or uplink reception.

21. The apparatus according to any of claims 18 to 20, wherein the receiver is further adapted to perform neighbour cell measurement and preparation for transmission in a time interval (Tta) between reception of a timeslot comprising one of at least two bursts and subsequent transmission of data in a timeslot.

22. The apparatus according to any of claims 18 to 21, comprising two receivers for receiving at at least four distinct frequencies within the TDMA frame.

23. The apparatus according to claim 22, wherein the receiver is adapted to receive a timeslot comprising one of the at least two normal bursts while a second receiver is adapted to prepare for receiving another normal burst of the radio block by switching between two distinct frequencies.

24. The apparatus according to claim 22, wherein the receiver is adapted to receive a timeslot comprising the first of the at least two normal bursts at one frequency while a second receiver is adapted to receive a timeslot comprising the second normal burst of the at least two normal bursts at another distinct frequency.

25. The apparatus according to any of claims 18 to 24, wherein reception of normal bursts at distinct frequencies allows for exploiting frequency diversity gain.

26. The apparatus according to any of claims 18 to 25 where the apparatus is a mobile station or a base station.

27. A communication system comprising the transmission apparatus according to any of claims 13 to 17 and the receiving apparatus according to any of claims 18 to 26.

28. The communication system according to claim 27, further comprising a duplexer for switching between the transmitting apparatus and the receiving apparatus.

29. A computer readable medium storing instructions that, when executed by a processor of a transmitting apparatus, cause the transmitting apparatus to transmit at least two bursts from a radio block utilising a TDMA frame comprising a plurality of timeslots, by:

allocating the at least two normal bursts of the radio block to be transmitted to timeslots of the TDMA frame,
wherein the allocation considers the number of receivers available at a receiving apparatus for receiving the timeslots of the TDMA frame and considers the time required by the receiving apparatus to switch a receiver of said number of receivers between distinct frequencies,
transmitting the at least two normal bursts within timeslots of the TDMA frame utilising at least two distinct frequencies.

30. The computer readable medium according to claim 29, storing instructions that, when executed by a processor of a transmitting apparatus, cause the transmitting apparatus to transmit at least two bursts from a radio block utilising a TDMA frame comprising a plurality of timeslots, by carrying out the steps of the method according to any of claims 2 to 4.

31. A computer readable medium storing instructions that, when executed by a processor of a receiving apparatus, cause the receiving apparatus to receive at least two bursts from a radio block utilising a TDMA frame comprising a plurality of timeslots, by:

receiving by the receiver of the receiving apparatus a timeslot comprising a first of the at least two normal bursts of the radio block;
switching the receiver of the receiving apparatus to another distinct frequency; and
receiving by said receiver another timeslot of the TDMA frame comprising the second of the at least two normal bursts at the distinct frequency of the receiving apparatus.

32. The computer readable medium according to claim 31 storing instructions that, when executed by a processor of a receiving apparatus, cause the receiving apparatus to receive at least two bursts from a radio block utilising a TDMA frame comprising a plurality of timeslots, by carrying out the steps of a method according to any of claims 6 to 12.

downlink TDMA Frame

downlink →

uplink →

Figure 1

downlink TDMA Frame

downlink slots →

uplink slots →

uplink TDMA Frame

Figure 2

downlink block on slot 0

uplink radio block on slot 0

uplink radio block on slot 1

**Figure 3**

**52 TDMA Frames**

| B0 | B1 | B2 | T | B3 | B4 | B5 | X | B6 | B7 | B8 | T | B9 | B10 | B11 | X |

**Figure 4**

| | | | | | | | |
|---|---|---|---|---|---|---|---|
| Receiver 1 | Rx (f1) | Trb | Rx (f3) | | | | Trb |
| Receiver 2 | Trb | Rx (f2) | Trb | Rx (f4) | | | |

| | | | | | | | | |
|---|---|---|---|---|---|---|---|---|
| Transmit | | Tta | Tta | Tx | | | | |

**Figure 5**

Receiver 1

| Rx (f1) | Trb | Rx (f3) | | | | | Trb |
|---------|-----|---------|--|--|--|--|-----|

Receiver 2

| Rx (f2) | Trb | Rx (f4) | | | | | Trb |
|---------|-----|---------|--|--|--|--|-----|

Transmit

| | Tta | Tta | Tx | | | | |
|--|-----|-----|----|--|--|--|--|

**Figure 6**

| Rx (f1) | Trb | Rx (f2) | | | | Trb | Rx (f3) | Trb | Rx (f4) | | | | Trb |
|---------|-----|---------|--|--|--|-----|---------|-----|---------|--|--|--|-----|

| | Tta | Tta | Tx | | | | | Tta | Tta | Tx | | | | |
|--|-----|-----|----|--|--|--|--|-----|-----|----|--|--|--|--|

**Figure 7**

**Figure 8**

**Base Station** *200*

Figure 9

**European Patent Office**

**EUROPEAN SEARCH REPORT**

Application Number

EP 05 01 8185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 680 168 A (AT&T CORP) 2 November 1995 (1995-11-02) * column 4, line 39 - column 6, line 38 * * figures 5,6 * ----- | 1,5,13, 18,29,31 | H04B7/26 |
| D,X | "GERAN evolution: proposed text on dual-carrier and multi-carrier for technical report" 3GPP TSG GERAN #25, 24 June 2005 (2005-06-24), XP002362276 Montreal,Canada * the whole document * ----- | 1,5,13, 18,29,31 | |
| X | US 5 446 739 A (NAKANO ET AL) 29 August 1995 (1995-08-29) * column 3, line 52 - column 6, line 35 * * figures 3,5 * ----- | 1,5,13, 18,29,31 | |

| | |
|---|---|
| | TECHNICAL FIELDS SEARCHED (IPC) |
| | H04B |

The present search report has been drawn up for all claims

| Place of search | Date of completion of the search | Examiner |
|---|---|---|
| The Hague | 11 January 2006 | Larcinese, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 05 01 8185

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2006

| Patent document cited in search report | | Publication date | Patent family member(s) | | Publication date |
|---|---|---|---|---|---|
| EP 0680168 | A | 02-11-1995 | CA | 2145700 A1 | 29-10-1995 |
| | | | JP | 7303090 A | 14-11-1995 |
| | | | US | 6064662 A | 16-05-2000 |
| | | | US | 6018528 A | 25-01-2000 |
| US 5446739 | A | 29-08-1995 | CA | 2112762 A1 | 07-07-1994 |
| | | | JP | 3212169 B2 | 25-09-2001 |
| | | | JP | 6204943 A | 22-07-1994 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• GERAN evolution - Proposed text on dual-carrier and multi-carrier for technical report. *Document GP-051510,* 20 June 2005, www.3gpp.org